# EUROPÄISCHE PATENTSCHRIFT

(11) **EP 2 025 507 B1**
(45) Veröffentlichungstag und Bekanntmachung des Hinweises auf die Patenterteilung: **22.12.2010**
(21) Anmeldenummer: 08161616.1
(22) Anmeldetag: 01.08.2008
(51) Int. Cl.: B32B 7/06, B32B 27/32, C08F 295/00, C09J 7/02

(54) **Trennmittel auf Basis von Ethylen-multi-Blockcopolymer**
Separating agent based on ethyl-multi-block copolymers
Produit de séparation à base de blocs multiples de copolymères d'éthylène

(30) Priorität: 13.08.2007 DE 102007038239
(43) Veröffentlichungstag der Anmeldung: 18.02.2009
(73) Patentinhaber: TESA SE, 20253 Hamburg (DE)
(72) Erfinder: Behrens, Dr. Nicole, 20257, Hamburg (DE)

(56) Entgegenhaltungen:
- JP-A- 2008 080 626
- US-A1- 2005 048 302
- US-A1- 2006 199 912

## Beschreibung

Die Erfindung betrifft ein Trennmittel auf Basis von Ethylen-multi-Blockcopolymer sowie die Verwendung des Trennmittels insbesondere in einem Klebeband.

Als Trennmittel werden feste oder flüssige Stoffe bezeichnet, die die Adhäsionskräfte zwischen zwei aneinandergrenzenden Oberflächen (zum Beispiel Formteil/Form) verringern, das heißt, ihr Verkleben verhindern, indem sie zwischen beiden Oberflächen einen leicht trennbaren Film bilden (Abhäsivmittel).

Silikonisierte Trennpapiere und -folien für den Einsatz in Verbindung mit Acrylat- und Kautschukklebemassen sind seit langem bekannt und finden eine breite Anwendung. Ein Nachteil ist allerdings die Gefahr des Silikon-Übertrags auf Oberflächen, die in der Folge einen schlechten Haftuntergrund für Haftklebemittel und Farben aufweisen. Weiterhin sind für die Silikonisierung eine Beschichtung des Trennpapiers/der Trennfolie und anschließend eine Vernetzung dieser Beschichtung nötig.
Eine Funktionsschicht, die als koextrudierte Schicht bei der Herstellung einer Trennfolie aufgebracht werden kann, würde Arbeitsschritte sparen und ist daher einer Silikonisierung gegenüber zu bevorzugen. Eine Koextrusion ist vor allem mit Polyolefinen leicht durchführbar. Daher wäre der Einsatz eines Polyolefins als Funktionsschicht mit Trennwirkung eine sehr attraktive Variante zur Silikonisierung, bislang ist dies allerdings nur sehr begrenzt möglich.

Den Einsatz einer Polyethylen-Trennfolie für Acrylat- und Kautschuk-Klebemassen beschreibt die GB 676,559 A. Das zum Zeitpunkt der Anmeldung einzige kommerziell erhältliche Polyethylen war ein Polyethylen niedriger Dichte mit Dichten zwischen ca. 0,915 und 0,935 g/cm³. Für Reinacrylatklebemassen mit hoher Glasübergangstemperatur sind solche Polyethylen-Trennfolien zwar geeignet, allerdings zeigen sie deutliche Schwächen in Verbindung mit harzabgemischten Acrylat- und Kautschuk-Klebemassen. Besonders nach längerer Lagerung sind die Trennkräfte zwischen Trennfolie und Klebemasse zu hoch.

Eine Trennfolie mit einer maximalen Trennkraft von 0,39 N/cm aus linearem Polyethylen mit Dichten zwischen 0,865 und 0,900 g/cm³ und mit einer Polydispersität unter 5,0 wird in US 5,948,517 A1 beschrieben. Obwohl sich die Offenbarung nicht auf bestimmte Klebemassen beschränkt, können durch die Begrenzung der Trennkraft nur ausgewählte Acrylatklebemassen verwendet werden. Stark klebende Acrylatklebemassen erreichen auf linearem Polyethylen im in der Offenbarung definierten Dichtenbereich leicht Trennkräfte bis zu 2 N/cm. Für Kautschuk-Klebemassen ist die Verwendung von Polyethylen-Trennfolien noch weniger geeignet.

Die Verwendung von linearen Polyethylenen mit Dichten von nicht mehr als 0,90 g/cm³ als Trennfolie für Acrylatklebemassen ist in der EP 0 742 814 A1 beschrieben. Die Offenbarung beschränkt sich auf lineare Polyethylene in Verbindung mit Acrylatklebemassen, wobei es sich bei den Polyethylenen um random-Copolymere aus α-Olefin und Ethylen handelt. In der Regel werden 1-Buten oder 1-Octen als α-Olefin verwendet. Mit steigendem α-Olefinanteil sinkt die Dichte des Polymers, da die statistisch eingebauten α-Olefine die Kristallisation des Polyethylens stören. Je geringer die Dichte, desto geringer ist auch die Trennkraft, die zur Trennung von Trennfolie und Klebemasse aufgebracht werden muss. Allerdings sinkt mit der Dichte in der Regel auch der Schmelzpunkt. Besonders wenn Trennfolien im Verbund mit Klebemassen über längere Zeit bei oft nicht kontrollierten klimatischen Bedingungen gelagert werden, sind Schmelzpunkte der Trennfolie aus der in EP 0 742 814 A1 verwendeten PolyethylenType EXACT 4006 von 60 °C nicht akzeptabel. Eine solche Trennfolie kann in der Praxis nur in Ausnahmefällen eingesetzt werden, da es zum Schmelzen des Polyethylens und Verblocken der Klebebandrollen kommen kann.

Die in der EP 0 742 814 A1 beschriebenen Polyethylene mit Dichten von höchstens 0,90 g/cm³ können neben dem Einsatz in Trennfolien natürlich auch als Außenschicht eines Haftklebebands verwendet werden, um die Haftung der Acrylatklebemasse auf der Klebeband-Rückseite zu verringern. Der niedrige Schmelzpunkt dieser Polyethylene ist allerdings auch in dieser Anwendung ein großer Nachteil.

Ein Ethylen-multi-Blockcopolymer, das auch als OBC ("olefin block copolymer") bezeichnet wird, beschreibt die WO 2005/090427 A1. Dieses multi-Blockcopolymer wird aus der Polymerisation zweier Olefine in der Anwesenheit von zwei Polymerisations-Katalysatoren unterschiedlicher Selektivität bezüglich der beiden Olefine sowie eines Kettenübertragungsreagenzes ("chain shuttling agent") erhalten.
Im multi-Blockcopolymer liegen strukturell unterschiedliche Blöcke des Copolymers vor. Ein Teil der Blöcke besteht wie das in der EP 0 742 814 A1 aus α-Olefin-EthylenCopolymeren, allerdings mit sehr hohem α-Olefin-Anteil. Der andere Teil enthält nur einen sehr geringen α-Olefin-Anteil, so dass es zu einer Kristallisation des Polyethylens aus diesen Blöcken des Copolymers kommen kann. Durch diese Kristallite liegt der Schmelzpunkt des multi-Blockcopolymers bei deutlich höheren Temperaturen als der Schmelzpunkt von random-Copolymeren aus identischen Monomeren.

Auch in der US 2006/0199912 sind Verpackungsfolien auf Basis von Ethylen-multi-Blockcopolymeren beschrieben.

Die Aufgabe der Erfindung ist es daher, ein Trennmittel insbesondere für einseitig klebende Klebeband zur Verfügung zu stellen, das nach längerer Lagerung in Kontakt mit einer Acrylat- oder Silikon-Klebmasse (bis zu zwei Jahren bei Temperaturen von bis zu 80 °C) noch leicht trennbar ist.

Gelöst wird diese Aufgabe durch ein Trennmittel, wie es im Hauptanspruch dargelegt ist. Gegenstand der Unteransprüche sind vorteilhafte Fortbildungen des Erfindungsgegenstandes. Des Weiteren betrifft die Erfindung Verwendungsvorschläge des erfindungsgemäßen Trennmittels.

Demgemäß betrifft die Erfindung ein Trennmittel insbesondere für eine Klebemasse mit einem Ethylen-multi-Blockcopolymer, wobei das Ethylen-multi-Blockcopolymer besteht aus Hartsegmentblöcken, enthaltend mindestens 95 % (w/w) Ethylen und ein Comonomer, und aus Weichsegmentblöcken, enthaltend Ethylen und ein Comonomer, wobei der Anteil an Comonomer in den Weichsegmentblöcken zwischen 10 und 20 Mol-% liegt, und wobei der Anteil an den Hartsegmentblöcken im Ethylen-multi-Blockcopolymer höchstens 45 % (w/w) beträgt.

Gemäß einer ersten vorteilhaften Ausführungsform der Erfindung weisen die Hartsegmentblöcke einen Kristallitschmelzpunkt von mindestens 110 °C auf.

Gemäß einer weiteren vorteilhaften Ausführungsform der Erfindung werden die Ethylen-multi-Blockcopolymere durch "chain-shuttling-Polymerisation" hergestellt.

Bei der "chain-shuttling-Polymerisation" werden zwei unterschiedliche Katalysatoren verwendet, die verschiedene Polymerstrukturen aufbauen. Durch eine Übertragung der Polymerkette von einem auf den anderen Katalysator werden multi-Blockcopolymere erhalten, die aus Segmenten mit unterschiedlicher Mikrostruktur bestehen (zum Beispiel semikristallin (hart) / amorph (weich)). Die Segmente unterscheiden sich in ihrer chemischen Struktur durch einen hohen (im Hartsegment) oder niedrigen (im Weichsegment) Anteil des Polyethylens im Polymer.
Das Comonomer, dessen Anteil im Weichsegment zwischen 10 und 20 Mol-%, bevorzugt zwischen 15 und 17 Mol-%, liegt, ist 1-Octen. Der Einsatz von Propylen, 1-Buten, 1-Penten, 4-Methyl-1-Penten, 1-Hexen, 1-Hepten, 1-Decen, Vinylacetat, 1-Methyl-Vinylacetat and ähnlicher Monomere ist ebenfalls möglich.
Durch die Copolymerisation des Comonomers werden amorphe Segmente geringer Dichte erhalten.

Eingesetzt wird im Prozess ein Katalysator 1, der aus einem Gemisch Ethen/höheres α-Olefin (1-Octen) ein hartes, semikristallines Polyolefin produziert, also eine hohe Einbaurate für Ethen und eine geringe für 1-Octen aufweist.
Weiterhin wird ein Katalysator 2 verwendet, der eine gesteigerte 1-Octen-Selektivität besitzt, der aus dem gleichen Gemisch ein amorphes weiches Polymer synthetisiert.
Neben den Katalysatoren 1 und 2 liegt außerdem ein Kettenübertragungsreagenz vor, das einen reversiblen Transfer der Polymerketten zwischen den Katalysatoren gewährleistet. Als Produkt wird das oben beschriebene multi-Blockcopolymer mit einstellbarem Anteil an Hart- und Weichsegmenten erhalten. Als Katalysator 1 und Katalysator 2 können zum Beispiel [N-(2,6-di(1-methylethyl)phenyl)amido](2-isopropylphenyl)(α-naphthalen-2-diyl(6-pyridin-2-diyl)methane)]hafnium dimethyl und 1,2-bis(3,5-di-t-butylphenylene)(1-(N-(1-methylethyl)immino)methyl)(2-oxoyl) zirconium dibenzyl oder [N-(2,6-di(1-methylethyl)phenyl)amido](2-isopropylphenyl)(a-naphthalen-2-diyl(6-pyridin-2-diyl)methane)]hafnium dimethyl und 1,2-bis-(3,5-di-t-butylphenylene)(1-(N-(2-methylcyclohexyl)-immino)methyl)(2-oxoyl) zirconium dibenzyl, jeweils zum Beispiel mit Diethylzink als Kettenübertragungsreagenz eingesetzt werden.

Zur Herabsetzung der Trennkraft zwischen Klebemassenschicht und Außenschicht des Klebebands oder einer Trennfolie ist es notwendig, dass das in der Außenschicht vorliegende Ethylen-multi-Blockcopolymer einen Hartsegment-Anteil von höchstens 45 % (w/w), bevorzugt 35 % (w/w) besitzt. Ethylen-multi-Blockcopolymere mit einem höheren Hartsegment-Anteil zeigen eine erhöhte Trennkraft zur Klebemasse und sind daher nicht für die Anwendung geeignet.

Aufgrund des Vorliegens der kristallinen Bereiche hätte der Fachmann von einer Verwendung des multi-Blockcopolymers in einem Trennmittel Abstand genommen, da eine erhöhte Kristallinität mit schlechten Eigenschaften als Trennmittel im Bezug auf Acrylatklebemassen korreliert.

Bevorzugt lässt sich das erfindungsgemäße Trennmittel in Form einer geschlossenen Schicht verwenden, insbesondere als Folie, dann auch Trennfolie genannt. Gemäß einer bevorzugten Ausführungsform der Erfindung besteht die Schicht zu mindestens 70 Gew.-% aus dem Trennmittel. Durch Zusatz eines weiteren Polyolefins kann die Trennwirkung der Schicht modifiziert werden. Um eine niedrige Trennwirkung zu erhalten, ist der Blend mit bis zu 30 Gew.-% eines Polyethylens oder Polypropylens bevorzugt. Die Trennfolie kann einen Einschicht-, aber auch einen Mehrschichtaufbau aufweisen, indem auf die Trennmittelschicht weitere Schichten aufgebracht sind.

Des Weiteren ist bevorzugt, wenn das Trennmittel als geschlossene Schicht auf der offenen Rückseite eines einseitig mit einer Klebemasse ausgerüsteten Trägermaterials verwendet wird. Bevorzugt besteht dann das Trägermaterial des Klebebands aus mindestens zwei Schichten, nämlich der eigentlichen Trägerfolie und der darauf aufgebrachten Trennmittelschicht. Bevorzugt sind vor allem Trägermaterialien, die durch Koextrusion der beiden Folienschichten hergestellt werden, so dass kein zusätzlicher Schritt zur Laminierung oder Kaschierung einzelner Folienschichten nötig ist.

Die Schicht aus Trennmittel aus Ethylen-multi-Blockcopolymer sollte vorzugsweise eine Dicke von höchstens 20 µm, weiter bevorzugt höchstens 10 µm, besitzen. Der Einsatz von dickeren Folienschichten oder Trennfolien, die aus dem multi-Blockcopolymer bestehen, ist im Bezug auf die Trennwirkung nicht von Nachteil. Die Ursache in der bevorzugten Verwendung von Schichten von höchstens 20 µm Dicke ist vielmehr die Optimierung des Preises des Endprodukts.

Wird das Ethylen-multi-Blockcopolymer als außen liegende Trennmittelschicht in einem mehrschichtigen Trägermaterial verwendet, so besteht die benachbarte Folienschicht gemäß einer weiteren vorteilhaften Ausführungsform der Erfindung zu mindestens 50 % (w/w) aus Homo-, Co- oder Terpolymer aus Polyethylen, Polypropylen und/oder Polybutylen. Bei Koextrusion dieser Polymeren und dem multi-Blockcopolymer ist die Haftung zwischen beiden so groß, dass es auch unter Belastung nicht zu einem Spalten der einzelnen Schichten voneinander kommt. Wird eine Haftvermittlerschicht zwischen multi-Blockcopolymer-Außenschicht und der benachbarten Folienschicht eingesetzt, so kann das multi-Blockcopolymer auch in Verbindung mit anderen Polymeren in der benachbarten Schicht verwendet werden.

Wenn das Trennmittel als geschlossene Schicht auf der offenen Rückseite eines einseitig mit einer Klebemasse ausgerüsteten Trägermaterials verwendet wird, ist auf dem Trägermaterial eine Klebemassenschicht, insbesondere Haftklebemassenschicht aufgetragen. Bei der auf der Trägerschicht angeordneten Klebemassenschicht handelt es sich vorzugsweise um eine Schicht aus Acrylat- oder Silikon-Klebemasse. Das Trägermaterial wird für die Klebebandanwendung einseitig mit dem bevorzugten Haftkleber als Lösung oder Dispersion oder 100 %ig (zum Beispiel Schmelze) oder durch Koextrusion mit der Folie beschichtet. Alternativ ist eine Beschichtung durch Transfer einer Klebemassen-Schicht durch Kaschieren möglich, aber im Unterschied zu herkömmlichen Polyethylenfolien nicht zwingend nötig. Die Klebeschicht(en) können durch Wärme oder energiereiche Strahlen vernetzt und erforderlichenfalls mit Trennfolie oder Trennpapier abgedeckt werden.

Zur Optimierung der Eigenschaften kann bevorzugt die zum Einsatz kommende Selbstklebemasse mit einem oder mehreren Additiven wie Klebrigmachern (Harzen), Weichmachern, Füllstoffen, Pigmenten, UV-Absorbern, Lichtschutz-, Alterungsschutzmitteln, Vernetzungsmitteln, Vernetzungspromotoren oder Elastomeren abgemischt sein.

Vorteilhaft ist eine physikalische Vorbehandlung der mit Haftklebemasse zu beschichtenden Trägerfolienseite zur Verbesserung der Haftung durch Flamm-, Plasma- oder Coronabehandlung.

Bei Bedarf kann vor dem Aufbringen der Haftkleberschicht eine Primerschicht, insbesondere lösungsmittelfrei wie zum Beispiel durch Koextrusion, aufgebracht werden, so dass sich zwischen der Trägerfolienschicht und einer Haftkleberschicht eine Primerschicht befindet.

Die Menge der Klebstoffschicht beträgt bevorzugt 10 bis 120 g/m², vorzugsweise 25 bis 100 g/m² (gemeint ist die Menge nach einer eventuell notwendigen Entfernung von Wasser oder Lösungsmittel; die Zahlenwerte entsprechen auch in etwa der Dicke in µm).

Der zur einseitigen Ausrüstung des Trägermaterials einzusetzende Haftkleber ist besonders bevorzugt eine Polyacrylathaftklebemasse, die ein Polymer umfasst, das in Bezug auf das Polymer
- 79 bis 100 Gew.-% Acrylsäureester und/oder Methacrylsäureester und/oder deren freie Säuren mit der Formel CH₂=C(R³)(COOR⁴), wobei R³ H oder CH₃ darstellt und R⁴ H oder Alkylketten mit 1 bis 30 C-Atomen darstellt, und
- 0 bis 30 Gew.-% olefinisch ungesättigte Monomere mit funktionellen Gruppen umfasst,
   wobei sich die Gewichtsangaben auf das Polymer beziehen.

Von der Erfindung umfasst werden auch erfindungsgemäß beschriebene Klebebänder, die in unmittelbarer oder mittelbarer Nachbarschaft zur Trägerschicht noch mindestens eine Funktionsschicht aufweisen. Beispiele für Funktionsschichten sind Schichten aus Farblack, oder Primer.

Der allgemeine Ausdruck "Klebeband" umfasst im Sinne dieser Erfindung alle flächigen Gebilde wie in zwei Dimensionen ausgedehnte Folien oder Folienabschnitte, Bänder mit ausgedehnter Länge und begrenzter Breite, Bandabschnitte, Etiketten, Stanzlinge und dergleichen.

### Prüfmethoden

Die Messungen werden, wenn nicht anders angegeben, bei einem Prüfklima von 23 ± 1 °C und 50 ± 5 % rel. Luftfeuchte durchgeführt.

Die Dichte der Polymeren wird nach ISO 1183 ermittelt und in g/cm³ ausgedrückt.

Der Kristallitschmelzpunkt (T_{cr}) wird mit DSC nach MTM 15902 (Basell-Methode) beziehungsweise ISO 3146 ermittelt.

Die Sofortklebkräfte werden bei einem Abzugswinkel von 180° in Anlehnung an AFERA 4001 an (nach Möglichkeit) 20 mm breiten Teststreifen bestimmt. Hierbei werden PVC-Platten nach AFERA-Norm als Prüfuntergrund verwendet, auf die ein Streifen des zu prüfenden Klebebands aufgebracht wird. Ein zweiter Streifen wird auf die Rückseite des ersten Streifens aufgebracht und dessen Klebkraft auf der Rückseite des ersten gemäß AFERA 4001 geprüft.

Die Trennkraft wird an einer Verklebung von zwei jeweils 20 mm breiten Teststreifen bestimmt. Zwei Streifen von 300 mm Länge eines einseitig haftklebrig ausgerüsteten Klebebands werden dazu so aufeinander verklebt, dass danach eines der Klebebänder genau deckungsgleich auf der Rückseite des zweiten Klebebands haftet. Die offene Klebemassenseite des zweiten Klebebands wird mit einem ebenfalls 20 mm breiten und 30 µm dicken Streifen aus PVC abgedeckt. Die Probe wird vor der Messung für 7 Tage bei 40 °C unter einer Gewichtsbelastung der Verklebung von 2 N/cm² gelagert. Nach der Lagerung werden die Teststreifen auf eine Länge von 220 mm zugeschnitten und für zwei Stunden bei Prüfklima gelagert. Für die Messung wird der obere Teststreifen der Verklebung in die obere Klemmbacke einer Zugprüfmaschine, wie sie in AFERA 4001 verwendet wird, eingespannt. Der untere Teststreifen sowie der PVC-Streifen werden in der unteren Klemmbacke eingespannt. Der Klemmbackenabstand beträgt dabei 50 mm.

Die Messung erfolgt mit einer Geschwindigkeit von 300 mm/min, mit der die Klemmbacken auseinander gefahren werden. Die über eine Strecke von 100 mm ermittelte Mittelwert der für die Trennung der Verklebung benötigten Kraft entspricht der Trennkraft.

Die Dicke wird nach DIN 53370 bestimmt, wobei der Taster plan (nicht gewölbt) ist. Bei strukturierten Folien wird jedoch die Dicke vor dem Prägen zugrunde gelegt. Dies ist auch nachträglich über das Flächengewicht (ermittelt nach DIN 53352) und Umrechnung mit der Dichte möglich. Die Prägetiefe ist die Differenz zwischen den Dicken mit und ohne Prägung.

Folgende Beispiele sollen die Erfindung erläutern, ohne deren Umfang zu beschränken:

### Beispiel 1

### 1) Synthese des Katalysatoren für die Herstellung des Ethylen-multi-Blockcopolymers:

[N-(2,6-di(1-methylethyl)phenyl)amido](2-isopropylphenyl)(a-naphthalen-2-diyl(6-pyridin-2-diyl)methan))hafnium dimethyl (Katalysator 1) wurde entsprechend WO 03/040195 A1 und WO 04/024740 A1 dargestellt.

Die Synthese von Bis-(1-(2-methylcyclohexyl)ethyl)(2-oxoyl-3,5-di(t-butyl)phenyl)immino) zirconium dibenzyl (Katalysator 2) verlief wie folgt:
a) Synthese von (1-(2-methylcyclohexyl)ethyl)(2-oxoyl-3,5-di(t-butyl)phenyl)imin 2-Methylcyclohexylamin (8,44 mL, 64,0 mmol) wurde in Methanol (90 mL) gelöst. Zu dieser Lösung wurde Di-t-butylsalicaldehyd (10,00 g, 42,67 mmol) gegeben, die Lösung für drei Stunden gerührt und dann für 12 Stunden auf
   - 25 °C gekühlt. Der entstandene gelbe Feststoff wurde abfiltriert, mit kaltem Methanol (2 x 15 mL) gewaschen und anschließend getrocknet. Die Ausbeute betrug 11,20 g.
b) Synthese von Bis-(1-(2-methylcyclohexyl)ethyl)(2-oxoyl-3,5-di(t-butyl)phenyl)immino)zirconium dibenzyl Eine Lösung von (1-(2-methylcyclohexyl)ethyl)(2-oxoyl-3,5-di(t-butyl)phenyl)imin (7,63 g, 23,2 mmol) in Toluol (200 mL) wurde langsam zu Zr(CH₂Ph)₄ (5,28 g, 11,6 mmol) in Toluol (600 mL) gegeben. Nach einer Stunde bei 25 °C wurde Toluol (680 mL) zugegeben und eine Lösung mit einer Konzentration von 0,00783 M erhalten.
   Als Co-Katalysator wurde eine Mischung aus Methyl-di(C₁₄-₁₈-Alkyl)-Ammoniumsalzen des Tetrakis(pentafluorophenyl)borats eingesetzt. Diese Salze wurden durch Reaktion eines Langketten-trialkylamins (Armeen^{™} M2HT, Akzo-Nobel), HCl und Li[B(C₆F₅)₄] dargestellt, im Wesentlichen wie in US 5,919,983 A1, Beispiel 2, beschrieben.

### 2) Synthese des Ethylen-multi-Blockcopolymers.

Ein Ethylen-multi-Blockcopolymer wurde mittels "chain-shuttling-Polymerisation" folgendermaßen hergestellt:
Eine kontinuierliche Polymerisation in Lösung wurde in einem Autoklaven mit integriertem Rührwerk durchgeführt. Ein isoparaffinisches Kohlenwasserstoffgemisch (Isopar^{™} E von ExxonMobil), Ethylen (1,22 kg/Stunde), 1-Octen (1,63 cm³/min) und Wasserstoff (21,70 cm³/min) wurden in einen temperierbaren Reaktor (4 L) geleitet. Lösungsmittel-Zufluss zum Reaktor und dessen Innendruck waren regelbar. Weiterhin wurden Katalysator 1 (0,07 kg/Stunde), Katalysator 2 (0,06 kg/Stunde), Cokatalysator (0,13 kg/Stunde) und
Diethylzink (0,25 kg/Stunde) jeweils in Isopar^{™} E in den Reaktor geleitet. Der Durchsatz des Isopar^{™} E betrug insgesamt 11,3 kg/Stunde. Reagenzien und Katalysatoren wurden in der Nähe des Reaktorbodens eingeleitet. Die Polymerisation wurde bei vollständig gefülltem Reaktor und einem Druck von 3,45 MPa bei 120 °C unter heftigem Rühren durchgeführt. Das Polymerisationsprodukt wurde durch Abflüsse in der Nähe des Reaktordeckels ausgeführt. Die Reaktion wurde durch Zugabe einer geringen Menge Wasser sowie Stabilisatoren gestoppt. Das Reaktionsgemisch wurde nach Beendigung der Polymerisation erhitzt, die flüchtigen Bestandteile wurden entfernt. Das Produkt hatte eine Dichte von 0,883 g/cm³, einen Schmelzpunkt von 121 °C und Molmassen von M_{w} = 118500 g/mol und Mₙ = 53100 g/mol (M_{w}/Mₙ = 2,2).

### 3) Herstellung der Folienbahn.

Eine Folie wurde durch Flachfolienextrusion in 1450 mm Breite gefertigt. Sie bestand aus einer 50 µm dicken Basisschicht und einer 10 µm dicken Außenschicht. Die Basisschicht bestand aus 91,3 % (w/w) aus dem Polypropylenblockcopolymer Novolen 2309 L (BASF, Schmelzindex 6 g/10 min bei 230 °C und 2,16 kg, Ethylengehalt ca. 6,5 % (w/w)), 8,4 % (w/w) Titandioxid und 0,3 % (w/w) des HALS-Stabilisators Tinuvin 770. Die Außenschicht bestand aus 100 % Ethylen-multi-Blockcopolymer Infuse (The Dow Chemical Company, d = 0,877 g/cm³).

### 4) Herstellung der Polyacrylats

Ein für radikalische Polymerisationen konventioneller 2-L-Glasreaktor wurde mit 40 g Acrylsäure, 360 g 2-Ethylhexylacrylat und 133 g Aceton/Isopropanol (96 : 4) befüllt. Nach 45 Minuten Durchleiten von Stickstoffgas unter Rühren wurde der Reaktor auf 58 °C hochgeheizt und 0,2 g Azoisobutyronitril (AIBN, Vazo 64^{™}, Firma DuPont) hinzugegeben. Anschließend wurde das äußere Heizbad auf 75 °C erwärmt und die Reaktion konstant bei dieser Außentemperatur durchgeführt. Nach 1 h Reaktionszeit wurde wiederum 0,2 g AIBN hinzugegeben. Nach 4 und 8 h wurde mit jeweils 100 g Aceton/Isopropanol (96 : 4)-Gemisch verdünnt. Zur Reduktion der Restinitiatoren wurden nach 8 und nach 10 h jeweils 0,6 g Bis-(4-tert.-butylcyclohexanyl)-peroxy-dicarbonat (Perkadox 16^{™}, Firma Akzo Nobel) hinzugegeben. Die Reaktion wurde nach 24 h Reaktionszeit abgebrochen und auf Raumtemperatur abgekühlt.

Anschließend wurde das Polyacrylat mit 0,4 Gew.-% Aluminium-(III)-acetylacetonat (3%ige Lösung in Isopropanol) abgemischt, auf einen Feststoffgehalt von 30 % mit Isopropanol verdünnt und dann aus Lösung auf Trennpapier beschichtet. Nach Trocknung für 20 Minuten bei 90 °C betrug der Masseauftrag 50 g/m².

Das Trägermaterial wurde vor der Beschichtung einseitig auf der Folienseite, deren Oberfläche aus Polymer der Basisschicht bestand, Corona-behandelt. Der Klebmassenauftrag erfolgte auf die vorbehandelte Seite des Trägermaterials durch Kaschieren von beschichtetem Trennpapier. Anschließend wurde das Trennpapier wieder abgedeckt und das Klebeband zu Stangen gewickelt.

### Beispiel 2

Eine Folie wurde durch Flachfolienextrusion in 1450 mm Breite gefertigt. Sie bestand aus einer 50 µm dicken Basisschicht und einer 10 µm dicken Außenschicht. Die Basisschicht bestand aus 91,3 % (w/w) aus dem Polypropylenblockcopolymer Novolen 2309 L (BASF, Schmelzindex 6 g/10 min bei 230 °C und 2,16 kg, Ethylengehalt ca. 6,5 % (w/w)), 8,4 % (w/w) Titandioxid und 0,3 % (w/w) des HALS-Stabilisators Tinuvin 770. Die Außenschicht bestand aus 100 % Ethylen-multi-Blockcopolymer Infuse D9107 (The Dow Chemical Company, d = 0,866 g/cm³).

### Der weitere Prozess war identisch mit dem Verfahren in Beispiel 1.

### Beispiel 3

Eine Folie wurde durch Flachfolienextrusion in 1450 mm Breite gefertigt. Sie bestand aus einer 50 µm dicken Basisschicht und einer 10 µm dicken Außenschicht. Die Basisschicht bestand aus 91,3 % (w/w) aus dem Polypropylenblockcopolymer Novolen 2309 L (BASF, Schmelzindex 6 g/10 min bei 230 °C und 2,16 kg, Ethylengehalt ca. 6,5 % (w/w)), 8,4 % (w/w) Titandioxid und 0,3 % (w/w) des HALS-Stabilisators Tinuvin 770. Die Außenschicht bestand aus 85 % Ethylen-multi-Blockcopolymer Infuse D9107 (The Dow Chemical Company, d = 0,866 g/cm³) und 15 % Polyethylen LD251 (ExxonMobil, d = 0,9155).

### Der weitere Prozess war identisch mit dem Verfahren in Beispiel 1.

### Vergleichsbeispiel 1

Eine Folie wurde durch Flachfolienextrusion in 1450 mm Breite gefertigt. Sie bestand aus einer 50 µm dicken Basisschicht und einer 10 µm dicken Außenschicht. Die Basisschicht bestand aus 91,3 % (w/w) aus dem Polypropylenblockcopolymer Novolen 2309 L (BASF, Schmelzindex 6 g/10 min bei 230 °C und 2,16 kg, Ethylengehalt ca. 6,5 % (w/w)), 8,4 % (w/w) Titandioxid und 0,3 % (w/w) des HALS-Stabilisators Tinuvin 770. Die Außenschicht bestand aus 100 % Polyethylen LD252 (ExxonMobil Chemical, PE-LD, d = 0,923 g/cm³).

### Der weitere Prozess war identisch mit dem Verfahren in Beispiel 1.

### Vergleichsbeispiel 2

Eine Folie wurde durch Flachfolienextrusion in 1450 mm Breite gefertigt. Sie bestand aus einer 50 µm dicken Basisschicht und einer 10 µm dicken Außenschicht. Die Basisschicht bestand aus 91,3 % (w/w) aus dem Polypropylenblockcopolymer Novolen 2309 L (BASF, Schmelzindex 6 g/10 min bei 230 °C und 2,16 kg, Ethylengehalt ca. 6,5 % (w/w)), 8,4 % (w/w) Titandioxid und 0,3 % (w/w) des HALS-Stabilisators Tinuvin 770. Die Außenschicht bestand aus 100 % Polyethylen LL 1030XV (ExxonMobil Chemical, PE-LLD, d = 0,918 g/cm³).

Der weitere Prozess war identisch mit dem Verfahren in Beispiel 1.

**Vergleich der Eigenschaften**

| | Sofortklebkraft [N/cm] | Trennkraft [N/cm] |
|---|---|---|
| Beispiel 1 | 5,5 | 1,8 |
| Beispiel 2 | 5,4 | 2,1 |
| Beispiel 3 | 5,4 | 1,3 |
| Vergleichsbeispiel 1 | 5,4 | 2,7 |
| Vergleichsbeispiel 2 | 6,1 | 3,4 |

Ein Vergleich der Trennkräfte aus den Beispielen 1 und 2 mit denen der Vergleichsbeispiele macht deutlich, dass die Klebkräfte der Acrylatklebemasse auf den Folien mit Ethylen-multi-Blockcopolymer weit unter denen der übrigen Außenschichten liegen. Während die Sofortklebkräfte der Beispiele oft noch in der Größenordnung der Vergleichsbeispiele liegen, erreichen die Trennkräfte nach längerer Lagerung bei erhöhter Temperatur bei Verwendung einer multi-Blockcopolymer-Außenschicht in keinem Fall das Niveau der Vergleichsbeispiele. Diese Unterschiede zwischen Sofortklebkraft und Trennkraft sind in einer Änderung der Verklebungsfestigkeit der Acrylatklebemasse auf verschiedenen Untergründen bei Lagerung des Klebeverbundes begründet. Während es bei Lagerung meist zu einer Erhöhung der Verklebungsfestigkeit kommt, gilt dies nicht oder nur in geringem Maß für die Verklebung auf Ethylen-multi-Blockcopolymer. Damit ist dieser Untergrund besonders zur Erreichung einer niedrigen Abrollkraft auch nach Lagerung geeignet.

## Patentansprüche

1. Trennmittel insbesondere für eine Klebemasse mit einem Ethylen-multi-Blockcopolymer, wobei das Ethylen-multi-Blockcopolymer besteht aus Hartsegmentblöcken, enthaltend mindestens 95 % (w/w) Ethylen und ein Comonomer, und aus Weichsegmentblöcken, enthaltend Ethylen und ein Comonomer, wobei der Anteil an Comonomer in den Weichsegmentblöcken zwischen 10 und 20 Mol-% liegt, und wobei der Anteil an den Hartsegmentblöcken im Ethylen-multi-Blockcopolymer höchstens 45 % (w/w) beträgt.

2. Trennmittel nach Anspruch 1,
**dadurch gekennzeichnet, dass**
die Hartsegmentblöcke einen Kristallitschmelzpunkt von mindestens 110 °C aufweisen.

3. Trennmittel nach Anspruch 1 oder 2,
**dadurch gekennzeichnet, dass**
das Ethylen-multi-Blockcopolymer durch "chain-shuttling-Polymerisation" erzeugt wird.

4. Trennmittel nach zumindest einem der Ansprüche 1 bis 3,
**dadurch gekennzeichnet, dass**
das Comonomer ein C₃- bis C₁₀-Olefin, vorzugsweise ein C₈-Olefin ist.

5. Trennmittel nach zumindest einem der vorherigen Ansprüche,
**dadurch gekennzeichnet, dass**
der Anteil an den Hartsegmentblöcken im Ethylen-multi-Blockcopolymer höchstens 35 % (w/w) beträgt.

6. Verwendung eines Trennmittels nach zumindest einem der vorherigen Ansprüche in Form einer geschlossenen Schicht, insbesondere Folie.

7. Verwendung eines Trennmittels nach zumindest einem der vorherigen Ansprüche als insbesondere geschlossene Schicht auf der offenen Rückseite eines einseitig mit einer Klebemasse ausgerüsteten Trägermaterials.

8. Verwendung eines Trennmittels nach Anspruch 7,
**dadurch gekennzeichnet, dass**
die Schicht eine Dicke von höchstens 20 µm, bevorzugt höchstens 10 µm aufweist.

9. Verwendung eines Trennmittels nach zumindest einem der Ansprüche 7 oder 8,
**dadurch gekennzeichnet, dass**
die Schicht zu mindestens 70 Gew.-% aus dem Trennmittel besteht.

10. Verwendung eines Trennmittels nach Anspruch 7,
**dadurch gekennzeichnet, dass**
es sich bei der zumindest einseitig auf dem Trägermaterial aufgebrachten Klebemassenschicht um eine Haftklebemasse handelt, gewählt aus der Gruppe der Acrylatkleber.

## Claims

1. Release agent more particularly for an adhesive with an ethylene multi-block copolymer, the ethylene multi-block copolymer being composed of hard segment blocks, comprising at least 95% (w/w) ethylene and a comonomer, and of soft segment blocks, comprising ethylene and a comonomer, the fraction of comonomer in the soft segment blocks being between 10 and 20 mol%, and the fraction of the hard segment blocks in the ethylene multi-block copolymer being not more than 45% (w/w).

2. Release agent according to Claim 1,
**characterized in that**
the hard segment blocks have a crystallite melting point of at least 110°C.

3. Release agent according to Claim 1 or 2,
**characterized in that**
the ethylene multi-block copolymer is produced by chain-shuttling polymerization.

4. Release agent according to at least one of Claims 1 to 3,
**characterized in that**
the comonomer is a C₃ to C₁₀ olefin, preferably a C₈ olefin.

5. Release agent according to at least one of the preceding claims,
**characterized in that**
the fraction of the hard segment blocks in the ethylene multi-block copolymer is not more than 35% (w/w).

6. Use of a release agent according to at least one of the preceding claims in the form of a coherent layer, more particularly film.

7. Use of a release agent according to at least one of the preceding claims as a layer, more particularly a coherent layer, on the open reverse face of a carrier material provided on one side with an adhesive.

8. Use of a release agent according to Claim 7,
**characterized in that**
the layer has a thickness of not more than 20 µm, preferably not more than 10 µm.

9. Use of a release agent according to at least one of Claims 7 or 8,
**characterized in that**
the layer is composed to an extent of at least 70% by weight of the release agent.

10. Use of a release agent according to Claim 7,
**characterized in that**
the layer of adhesive applied at least to one side of the carrier material is a pressure-sensitive adhesive selected from the group of acrylate adhesives.

## Revendications

1. Agent de séparation, en particulier pour une masse adhésive avec un copolymère à blocs multiples d'éthylène, où le copolymère à blocs multiples d'éthylène est constitué par des blocs de segments durs, contenant au moins 95% (P/P) d'éthylène et un comonomère, et de blocs de segments mous, contenant de l'éthylène et un comonomère, où la proportion de comonomère dans les blocs de segments mous est située entre 10 et 20% en mole, et où la proportion de blocs de segments durs dans le copolymère à blocs multiples d'éthylène est d'au plus 45% (P/P).

2. Agent de séparation selon la revendication 1, **caractérisé en ce que** les blocs de segments durs présentent un point de fusion des cristaux d'au moins 110°C.

3. Agent de séparation selon la revendication 1 ou 2, **caractérisé en ce que** le copolymère à blocs multiples d'éthylène est produit par une polymérisation avec transfert de chaînes ("chain-shuttling").

4. Agent de séparation selon au moins l'une quelconque des revendications 1 à 3, **caractérisé en ce que** le comonomère est une oléfine en C₃-C₁₀, de préférence une oléfine en C₈.

5. Agent de séparation selon au moins l'une quelconque des revendications précédentes, **caractérisé en ce que** la proportion de blocs de segments durs dans le copolymère à blocs multiples d'éthylène est d'au plus 35% (P/P).

6. Utilisation d'un agent de séparation selon au moins l'une quelconque des revendications précédentes sous forme d'une couche fermée, en particulier une feuille.

7. Utilisation d'un agent de séparation selon au moins l'une quelconque des revendications précédentes sous forme d'une couche en particulier fermée sur la face arrière ouverte d'un matériau support apprêté sur une face avec une masse adhésive.

8. Utilisation d'un agent de séparation selon la revendication 7, **caractérisée en ce que** la couche présente une épaisseur d'au plus 20 µm, de préférence d'au plus 10 µm.

9. Utilisation d'un agent de séparation selon au moins l'une quelconque des revendications 7 ou 8, **caractérisée en ce que** la couche est constituée, à raison d'au moins 70% en poids, d'un agent de séparation.

10. Utilisation d'un agent de séparation selon la revendication 7, **caractérisée en ce qu'**il s'agit, pour la couche de masse adhésive appliquée sur au moins une face sur le support, d'une masse autoadhésive, choisie dans le groupe des adhésifs à base d'acrylate.
